# EUROPEAN PATENT APPLICATION

(11) **EP 0 923 026 A1**
(43) Date of publication of application: **16.06.1999**
(21) Application number: 98928553.1
(22) Date of filing: 18.06.1998
(51) Int. Cl.: G06F 9/06

(54) **STORAGE MEDIUM HAVING ELECTRONIC CIRCUITS**

(30) Priority: 19.06.1997 JP 16296197
(71) Applicant: Kabushiki Kaisha Optrom, Miyagi-ken 989-3124 (JP)
(72) Inventor: SHIGETOMI, Takashi Kabushiki Kaisha Optrom, Sendai-shi Miyagi-ken 989-3124 (JP); SAITO, Tetsuo Kabushiki Kaisha Optrom, Sendai-shi Miyagi-ken 989-3124 (JP); KOMAKI, Tsunematsu Advanced Electronics Kabushiki, Taito-ku Tokyo 111-0053 (JP)
(74) Representative: Rinuy, Santarelli
(86) International application number: JP9802703
(87) International publication number: WO9858310

(57) **Abstract**

The present invention provides a storage medium having an electronic circuit that is mounted on at least a surface or between both surfaces of the storage medium, and that optimally shares information with the information recording surface. The storage medium is an intelligent disk having a disk block storing information and an electronic circuit block processing information, wherein the electronic circuit block and the information storage block store at least a bootstrap program for starting a system, system programs, and application programs with sharing them. The electronic circuit block and the information storage block further store data to be used in the application programs. A plurality of the bootstrap programs, system programs, and application programs are stored.

## Description

### Technical Field

The present invention relates to a storage medium, that is, a storage medium having an electronic circuit that has at least a bootstrap program that starts a system, system programs, application programs, and data and is used for startup of a computer system.

### Background Art

Information storage media, magnetic disks, magnetic disk cards, and the like as information storage media magnetically recording information, optical disks, optical cards, and the like as information storage media optically recording information, magneto-optical disks, magneto-optical cards, and the like as information storage media that are devised by mixing both technologies are well-known, and are already used practically.

An important function of these conventional information storage media is to record information, and hence research and development from the viewpoint of miniaturization and large capacity have proceeded. In result, quantity of recorded information has increased year by year owing to a high-density recording method in the width or pitch direction, a recording method to multiple layers, and the like.

In regard to physical or logical recording methods and formats that are used for writing information on information storage media, kinds of information written beforehand on information storage media, or the like, methods that each operator judges them with a case of an information storage medium and the like or each information recording apparatus judges or recognizes them on an information storage medium as a reading system have been used.

In addition, for information storage media reading and writing information from various types of information storage media, various apparatuses have been developed and produced. Nevertheless, since compatibility between manufacturers or upper compatibility is not complete, users must bear the load.

Furthermore, hereinafter, if systems such as network computers (NCs), where various types of OSs and application programs are down-loaded into standardized system devices, every use, become widespread, there will be requests to simplify OSs and application programs as much as possible.

### Disclosure of Invention

The present invention considers the above viewpoints and provides a storage medium having an electronic circuit that is mounted on at least a surface or between both surfaces of the storage medium; that has at least any one or a plurality of a bootstrap program for starting a system, system programs, application programs, and data; that has the information recording surface recording programs and data that are not stored in the electronic circuit; and that optimally shares information with the information recording surface.

In order to solve this task, a storage medium of the present invention has a information storage block for storing information and an electronic circuit block for processing information, wherein the electronic circuit block and information storage block store at least a bootstrap program for starting a system, system programs, and application programs with sharing them.

Here, the electronic circuit block and information storage block further store data to be used in application programs. In addition, they store a plurality of the bootstrap program, system programs, and application programs. Furthermore, the electronic circuit block stores the bootstrap program, and the information storage block stores system programs and application programs. Moreover, the electronic circuit block stores the application programs, and the information storage block stores the bootstrap program and system programs. In addition, the electronic circuit block stores the system programs, and the information storage block stores the bootstrap program and application programs. Furthermore, the electronic circuit block stores the bootstrap program and system programs, and the information storage block stores the application programs. Moreover, the electronic circuit block stores the bootstrap program and application programs, and the information storage block stores the system programs. In addition, the electronic circuit block stores the system programs and application programs, and the information storage block stores the bootstrap program. Furthermore, the electronic circuit block stores the bootstrap program, system programs, and application programs, and the information storage block stores data. Moreover, information storage block stores the bootstrap program, system programs, and application programs, and the electronic circuit block stores the data. In addition, the storage medium has the electronic circuit on at least a surface or between both surfaces of the storage medium itself, and has structure that is double-surface and detachable from a drive unit. In addition, the storage medium is an optical disk.

The present invention can provide a storage medium having an electronic circuit that is mounted on at least a surface or between both surfaces of the storage medium, that has at least any one or a plurality of a bootstrap program for starting a system, system programs, application programs, and data, that has the information recording surface recording programs and data that is not stored in the electronic circuit, and that optimally shares information with the information recording surface.

### Brief Description of Drawings

Fig. 1 is a sketch of a computer system using an ID of this embodiment;
Fig. 2 is a drawing of a constructive example of the ID of this embodiment;
Fig. 3 is a diagram of an internal construction of the ID of this embodiment with associating with the computer system;
Fig. 4 is a drawing of an example of the ID of this embodiment sharing information;
Fig. 5 is a drawing of another example of the ID of this embodiment sharing information;
Fig. 6 is a drawing of still another example of the ID of this embodiment sharing information; and
Fig. 7 is a flow chart of an example of system start of the computer system using a storage medium of this embodiment.

### Best Mode for Carrying Out the Invention

For more detailed description of the present invention, embodiments of the present invention will be described with reference to attached drawings.

### (Constructive example of storage medium of this embodiment and system thereof)

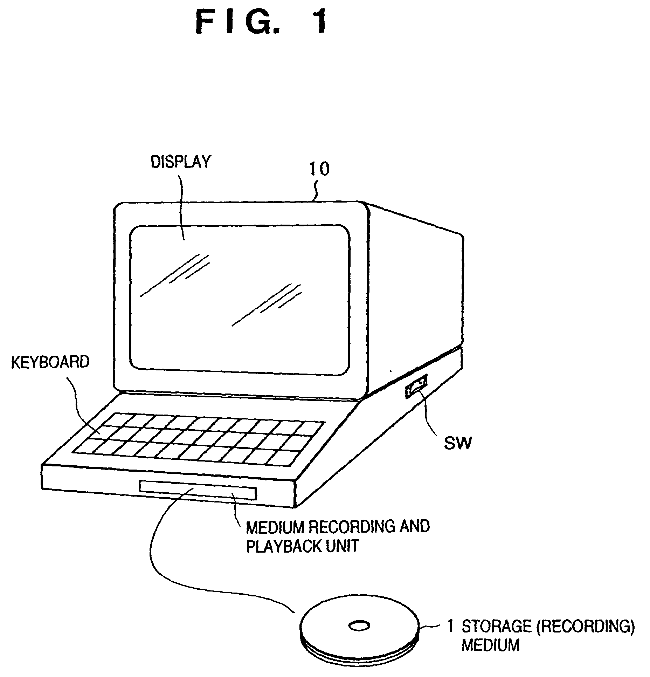

Fig. 1 is a sketch showing a computer system accessible to an optical disk that has an electronic circuit and is a storage medium of this embodiment (hereinafter, this disk is called an intelligent disk (ID)).

Numeral 10 is a personal computer comprising a display unit for display, a keyboard for input, and the like. In this example, the computer 10 further comprises an optical disk recording/playback unit, and hence it is possible to read information from a disk surface by inserting an ID 1 of the example while it is possible to read information from the electronic circuit formed in one-piece with the disk.

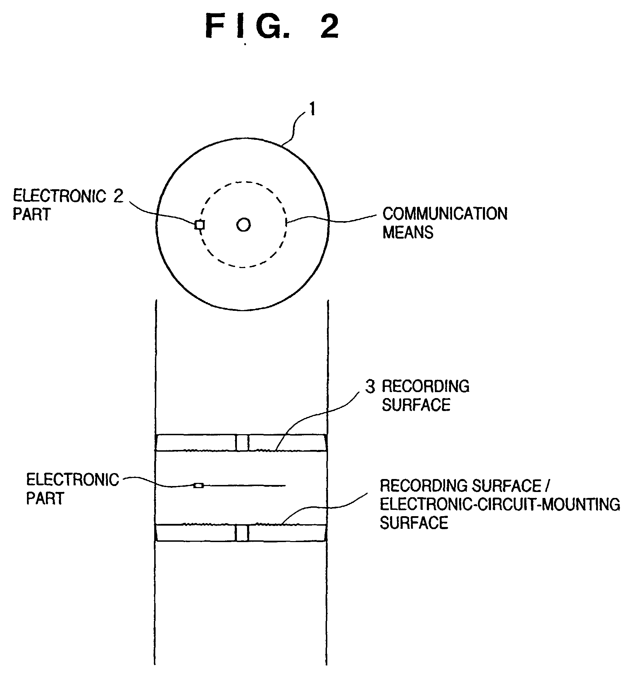

Fig. 2 is a drawing of a constructive example of an optical disk having an electronic circuit.

As shown in Fig. 2, the electronic circuit 2 is inserted between two recording surfaces 3, and communication means (an antenna) for communicating with the personal computer 10 is extended from an electronic part. In addition, location of the electronic circuit is not limited to this example.

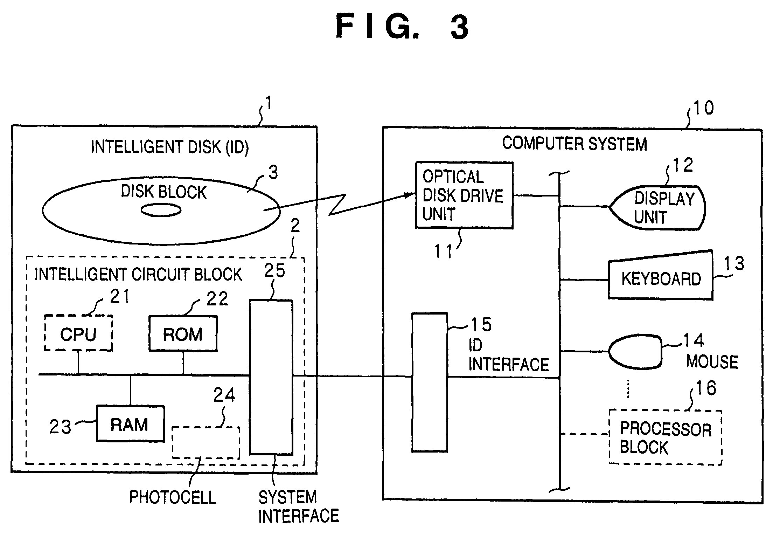

Fig. 3 is a diagram exemplifying the construction of the ID of this embodiment with associating with the computer system.

In the diagram, the intelligent circuit block 2 has ROM 22 storing fixed programs, and if necessary, the block 2 further has RAM 23 for temporary storage, and a CPU 21 for executing programs stored in the ROM 22 and RAM 23. Numeral 24 shows a photocell that is necessary if the ID side has an independent power source. The intelligent circuit block 2 exchanges information with an external apparatus via a system interface 25. Contacts of the interface can be contact type or a non-contact type, and a bus-connection type or a communication-connection type. Radio wave communication, optical communication, and the like are conceivable as the communication method.

In addition, numeral 10 shows a computer system whose essential components are an optical disk drive unit 11 including a pickup for reading (writing) data from a disk block 3 of the ID of this example and a drive circuit for the pickup, a display unit 12 (LCD is preferable) for displaying the current state or information of the system, a keyboard 13 (this can be substituted for a touch panel on the display unit 13) for inputting users command, a mouse 14 (this is omitted in a portable personal computer) for inputting user's command similarly, a processor block 16 for controlling the system independently, and an ID interface 15 for exchanging data with the intelligent circuit block 2 of the ID.

Furthermore, although the computer system is described in the above description can be used as a personal computer, the computer system can be a dedicated device such as a display processor for the display unit 12, a printing processor for a printer (not shown), and an information saving processor for a hard disk (not shown). Nevertheless, the optical disk drive unit 11 is always essential.

In this case, in order to improve a conventional device, it becomes necessary for the ID side to match the system side via the ID interface 15 and system interface 25. Nevertheless, it is preferable for any IDs to be able to easily connect to any systems by standardizing interfaces (also in the case of a bus connection) in future.

In this example, in regard to the CPU 21 of the ID 1 and the processor block 16 of the computer system 10, both processors may be prepared or only one of the processors may be prepared for controlling the system. (Example of information distribution to disk block and intelligent circuit block)

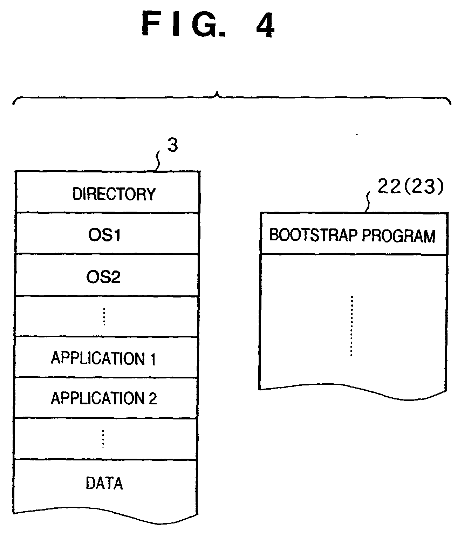

Fig. 4 is a drawing showing an example of information distribution on the ID.

In Fig. 4, a plurality of OSs (OS1, OS2,...), a plurality of application programs (application 1, application 2,...), and data are stored at positions pointed to by a directory of the disk block 3. In addition, a bootstrap program is stored in the ROM 22 or RAM 23 of the intelligent circuit block 2. The computer system 10 obtains the bootstrap program from the intelligent circuit block 2, and loads a predetermined OS (suitable to the system or requested by a user) from the disk block 3 according to the bootstrap program, further loads and executes a desired application program according to the command selected by the user.

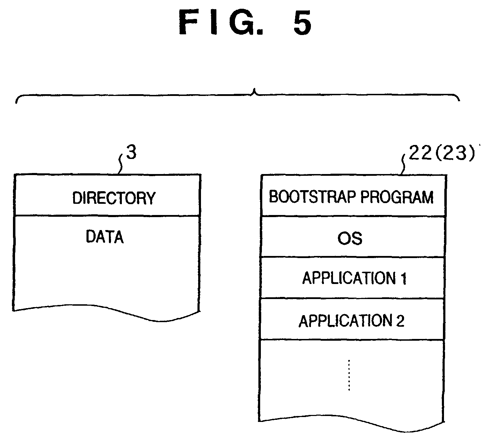

Fig. 5 is a drawing of another example of information distribution on the ID.

Only data exists at a position pointed to by a directory of the disk block 3. On the other hand, all the programs such as a bootstrap program, OSs, and application programs are stored in the ROM 22 (RAM 23) of the intelligent circuit block 2. This case seems as if the intelligent circuit block 2 of the ID 1 and the computer system 10 constructed a conventional computer.

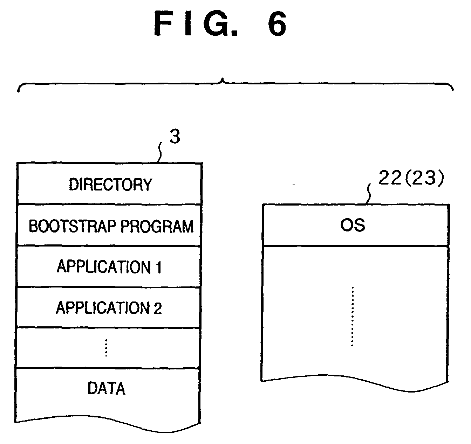

Fig. 6 is a drawing of still another example of information distribution on the ID.

A bootstrap program, a plurality of application programs, and data are stored at positions pointed by a directory on the disk block 3, and only the OSs are stored in the ROM 22 (RAM 23) of the intelligent circuit block 2.

Examples of information distribution in Figs. 4 to 6 are not all encompassing, and hence the four components such as the bootstrap program, OSs, application programs, and data can be distributed in any combination. Furthermore, contents of the OSs, application programs, and data can be distributed respectively in the disk block 3 and intelligent circuit block 2.

This distribution can be performed so that repeating of frequent rotation/stop may be avoided when control of the rotation/stop of the disk is performed during system operation, or the repeating may be optimal from the viewpoints of speed of reading from the disk block 3 and reading from the ROM (RAM) via the interface and transmission capacity. Thus, if the system is a dedicated device and its program is not changed, it is possible that the program is stored in the disk block 3, data is stored in the intelligent circuit block 2, the program is read at the time of initial start, and thereafter, the program is executed with the rotation of the disk stopped. On the other hand, if the system is a general-purpose system where programs are frequency changed, it is possible to treat program change without rotating the disk by placing data in the disk block 3 and the programs in the intelligent circuit block 2.

In addition, although the distribution is assumed to be fixed in the above description, the distribution can be changed corresponding to a change in the state of system operation, for example, a state of empty capacity of the RAM becoming small. Furthermore, the next system start can be initialed based on the final state of the current operation; by storing the final state in the disk block 3 (or the RAM 23) as a table.

### (Example of startup procedure of a system in this embodiment)

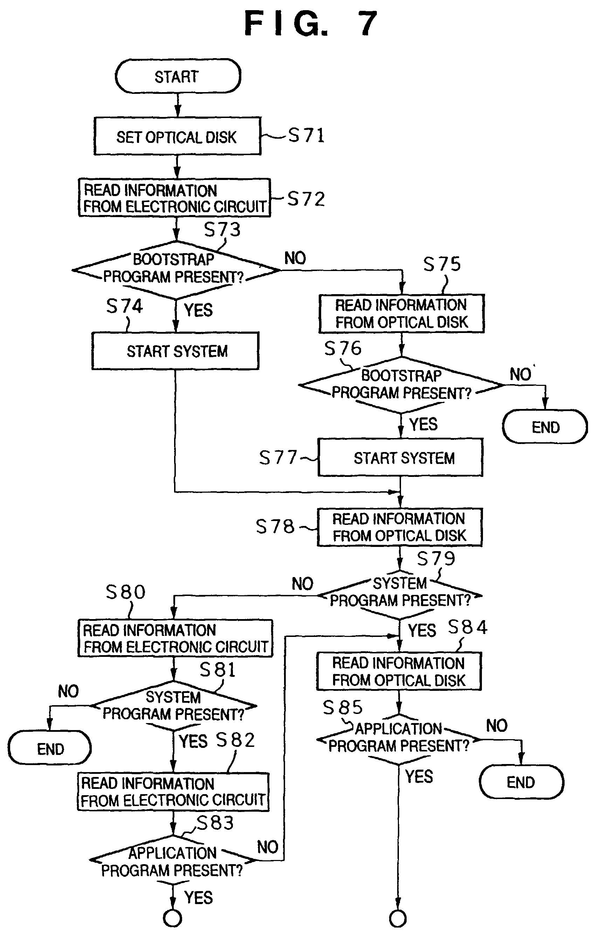

Fig. 7 is an example of a flow chart such that the system can be started even if the ID distributes information in any way.

First, if an optical disk is set at step S71, the process goes to step S72 to reproduce information from the electronic circuit 2. At step S73, whether or not the bootstrap program is present in the electronic circuit 2 is checked, and if present, initialization and start of the system are performed.

On the other hand, if not present, the process goes to step S75 to read information from the optical disk 3. Furthermore, at step S76, whether or not the bootstrap program is present is checked. If the bootstrap program is not present on the optical disk also, the processing is completed since the system cannot be started with this ID 1. However, if the ID 1 has an automatic communication function and downloads a necessary program from an external host, such a problem can be avoided. If the bootstrap program is present on the optical disk 3, the process goes to step S77 to start the system.

Next, at step S78, information on the optical disk 3 is read from the position pointed by the bootstrap program, and at step S79, whether or not the system program is present is checked. If present, the process goes to step S84 to read information from the optical disk 3. Furthermore, whether or not the application program is present is checked, and if not present, the process is completed (in this case, although an application program in the electronic circuit 2 can be checked, in this example, it is assumed that the application programs are not present in the electronic circuit 2). If present, the application program is executed.

If the system program is not present on the optical disk 3 at step S79, the process goes to step S80 to load information from the electronic circuit 2. Furthermore, at step S81, whether or not a system program is present is checked. If not present, the process is completed. If present, information in the electronic circuit 2 is loaded at step S82. Next, at step S83, whether or not an application program is present is checked. If present, the application program is executed, and if not, the process goes to step S84 to search for an application program on the optical disk 3.

Hereinbefore, the present invention is described with preferred embodiments. Nevertheless, the present invention is not limited to the above-described embodiments and various changes, additions, and modifications can be made within the spirits and scope as set out in the accompanying claims.

## Claims

1. A storage medium having an information storage block storing information and an electronic circuit block processing information, wherein said electronic circuit block and said information storage block store at least a bootstrap program for starting a system, system programs, and application programs with distributing them.

2. The storage medium according to claim 1, wherein said electronic circuit block and said information storage block further store data to be used in application programs.

3. The storage medium according to claim 1, wherein a plurality of said bootstrap programs, system programs, and application programs are stored.

4. The storage medium according to any one of claims 1 and 2, wherein said electronic circuit block stores a bootstrap program, and said information storage block stores system programs and application programs.

5. The storage medium according to any one of claims 1 and 2, wherein said electronic circuit block stores application programs, and said information storage block stores a bootstrap program and system programs.

6. The storage medium according to any one of claims 1 and 2, wherein said electronic circuit block stores system programs, and said information storage block stores a bootstrap program and application programs.

7. The storage medium according to any one of claims 1 and 2, wherein said electronic circuit block stores a bootstrap program and system programs, and said information storage block stores application programs.

8. The storage medium according to any one of claims 1 and 2, wherein said electronic circuit block stores a bootstrap program and application programs, and said information storage block stores system programs.

9. The storage medium according to any one of claims 1 and 2, wherein said electronic circuit block stores system programs and application programs, and said information storage block stores a bootstrap program.

10. The storage medium according to any one of claims 1 and 2, wherein said electronic circuit block stores a bootstrap program, system programs, and application programs, and said information storage block stores data.

11. The storage medium according to any one of claims 1 and 2, wherein said information storage block stores a bootstrap program, system programs, and application programs, and said electronic circuit block stores data.

12. The storage medium according to any one of claims 1 and 2, wherein said storage medium has an electronic circuit on at least a surface or between both surfaces of said storage medium itself, has double-surface structure, and is detachable from a drive unit.

13. The storage medium according to any one of claims 1 and 2, wherein said storage medium is an optical disk.
